# EUROPÄISCHE PATENTSCHRIFT

(11) **EP 2 113 368 B1**
(45) Veröffentlichungstag und Bekanntmachung des Hinweises auf die Patenterteilung: **03.03.2021**
(21) Anmeldenummer: 09004872.9
(22) Anmeldetag: 01.04.2009
(51) Int. Cl.: B29C 49/64, B29C 49/16, B29C 49/36, B29C 49/42, B29C 49/62, B29C 49/78

(54) **Vorrichtung zum Blasformen**
Blow moulding device
Dispositif de formage par soufflage

(30) Priorität: 17.04.2008 DE 202008005257 U
(43) Veröffentlichungstag der Anmeldung: 04.11.2009
(60) Teilanmeldung: 18186588.2
(73) Patentinhaber: Krones AG, 93073 Neutraubling (DE)
(72) Erfinder: Detrois, Christian, 88190 Golbey (FR)
(74) Vertreter: Grünecker Patent- und Rechtsanwälte PartG mbB

(56) Entgegenhaltungen:
- EP-A2- 0 409 388
- WO-A1-96/25285
- WO-A2-2008/006347
- DE-A1- 3 111 925
- DE-A1-102004 014 653
- DE-A1-102004 018 146
- DE-C1- 4 325 559
- DE-U1-202007 008 120
- US-A- 5 229 043
- US-A1- 2004 173 949
- US-B1- 6 423 253

## Beschreibung

Die Erfindung bezieht sich auf eine Vorrichtung zum Blasformen von Hohlkörpern aus Kunststoff.

Eine derartige Vorrichtung ist aus der DE 10 2004 014 653 A1 bekannt. Die bekannte Vorrichtung enthält eine Blasformeinrichtung in Form eines rotierenden Blasmoduls, in dem eine Vielzahl von Blasformen vorgesehen sind. Die Blasformen sind mit einer Mehrzahl von Druckluftspeichern zum Einleiten von Blasluft mit unterschiedlichen Drücken verbunden. Zum Herstellen der Hohlkörper in den Blasformen werden zunächst erwärmte Vorformlinge in die jeweiligen Blasformen eingesetzt und durch Anlegen eines Innendrucks durch Einleiten von Druckluft unter einem ersten Druck aufgeweitet (Vorblasphase). Anschließend wird Druckluft unter einem zweiten, höheren Druck eingeleitet, ggf. begleitet durch ein Recken mit Hilfe einer Reckstange, wodurch sich der Vorformling an die Wände der Blasform anlegt und deren Kontur annimmt. Schließlich kann Druckluft unter einem dritten, noch höheren Druck (Spül- und Kühlphase) eingeleitet werden, die den Hohlkörper vollständig ausprägt und kühlt. Die verwendete Druckluft wird zum Teil recycelt, d.h. jeweils demjenigen Druckluftspeicher zugeführt, dessen Druck unter dem gerade eingesetzten Prozessdruck liegt, was beispielsweise der Druckluftspeicher zum Fertigblasen oder ein Arbeitsluftspeicher sein kann, der Arbeitsluft zur Verwendung in anderen Fertigungsprozessen sammelt. Die restlliche Druckluft, die wegen des fehlenden Druckunterschiedes nicht mehr in irgendeinen der Speicher fließen kann, wird über einen Schalldämpfer an die Atmosphäre entlassen. Die meister Hohlkörper haben jedoch keine gleichmäßig dicke Wandung. So ist beispielsweise bei Flaschen oder Gläsern der Boden verstärkt, um dort eine höhere Festigkeit zu erzielen. Dadurch befindet sich jedoch am Boden mehr Material, das zum vollständigen Abkühlen bis auf einen Zustand, bei dem keine unbeabsichtigte Verformung mehr stattfinden kann, eine längere Kühlzeit und/oder eine intensivere Kühlung erfordert, die unter Umständen durch das beschriebene Kühlen von innen nicht oder nicht in einer akzeptablen Prozesszeit erreicht werden kann.

Auch die US 5 229 043 zeigt eine Vorrichtung zum Blasformen. Bei dieser wird zunächst Blasluft zum Ausformen des Behälters verwendet. Diese kann dann in einem weiteren Prozessschritt unter hohem Druck komprimiert und dabei verflüssigt werden. Das nun flüssige Kühlmedium kann anschließend zur Kühlung des Innenraums des Behälters genutzt werden.

Weiterhin zeigt die DE 10 2004 018 146 A1 eine Vorrichtung zum Blasformen, die über mehrere voneinander getrennte Strömungswege für Blasluft verfügt. Um eine Kühlwirkung auch bei maximalem Innendruck des Behälters zu ermöglichen, kann die im Behälter befindliche Druckluft über Öffnung eines Ventils an die Umgebung abgegeben werden, wobei die Drucklufteinleitung beibehalten wird, um ein möglichst gleichmäßiges und konstantes Druckniveau im Behälter zu realisieren.

Um eine intensivere Kühlung zu erreichen, wird beispielsweise in der DE 20 2007 008 120 U1 vorgeschlagen, Bereiche mit höherer Wandstärke, also beispielsweise den

Boden von Gefäßen, durch eine Kühleinrichtung zu führen, die Bereiche höherer Wandstärke gezielt zusätzlich von außen kühlt. Die Kühleinrichtung ist in eine Förderstrecke integriert, die die Hohlkörper aus der Blasformeinrichtung zu einer Weiterbehandlungsmaschine, also beispielsweise einer Befüllmaschine, fördert. Die Kühleinrichtung enthält einen Verteiler, der benachbart zum Bodenbereich der geförderten Hohlkörper angeordnet ist. Als Kühlmedium wird bevorzugt Flüssigkeit, insbesondere Sterilwasser, verwendet; der Einsatz von Luft ist jedoch auch möglich. Das Kühlmedium wird jedoch gesondert bereitgestellt, was einen zusätzlichen Aufwand erfordert.

Der Erfindung liegt die Aufgabe zugrunde, eine Vorrichtung zum Blasformen von Hohlkörpern zu schaffen, mit der auf konstruktiv und fertigungstechnisch einfache Weise eine partielle Kühlung von Bereichen des Hohlkörpers möglich ist.

Die Aufgabe wird durch die im Anspruch 1 angegebenen Merkmale gelöst.

Durch die erfindungsgemäße Ausgestaltung kann Exhaustluft, die normalerweise nicht mehr zu verwenden ist und in die Umgebung abgelassen wird, zum Kühlen einzelner Bereiche des Hohlkörpers eingesetzt werden. Die Exhaustluft hat den Vorteil, dass sie durch die Entspannung sehr kühl, trocken und ölfrei ist und sich dadurch optimal für den Einsatz zum gezielten, partiellen Nachkühlen von bestimmten (Problem-)Bereichen des Hohlkörpers eignet.

Vorteilhafte Weiterbildungen der Erfindung sind den Unteransprüchen zu entnehmen.

Die Kühleinrichtung ist bevorzugt außerhalb der Blasformeinrichtung angeordnet, kann jedoch auch in die Blasformeinrichtung integriert sein.

Die Exhaustluft wird bevorzugt zunächst in einem Sammelraum gesammelt, bevor sie der Kühleinrichtung zugeführt wird.

Bevorzugt wird die Exhaustluft vor einer Ableitung in die Atmosphäre abgezweigt, so dass die Exhaustluft auch, wie üblich, in die Atmosphäre entlastet werden kann, falls eine Kühlung nicht notwendig ist.

Beim Einsatz der Erfindung in einer Blasformeinrichtung mit einem rotierenden Blasmodul erfolgt die Versorgung der Kühleinrichtung bevorzugt aus einer Speicher-Ringleitung im Drehverteiler.

Ein Ausführungsbeispiel der Erfindung wird nachfolgend anhand der Zeichnungen näher erläutert.

Es zeigen:
- Fig. 1: eine Blasformanlage mit der erfindungsgemäßen Vorrichtung in stark schematisierter Darstellung, und
- Fig. 2: Einzelheiten der erfindungsgemäßen Vorrichtung in stark schematisierter Darstellung.

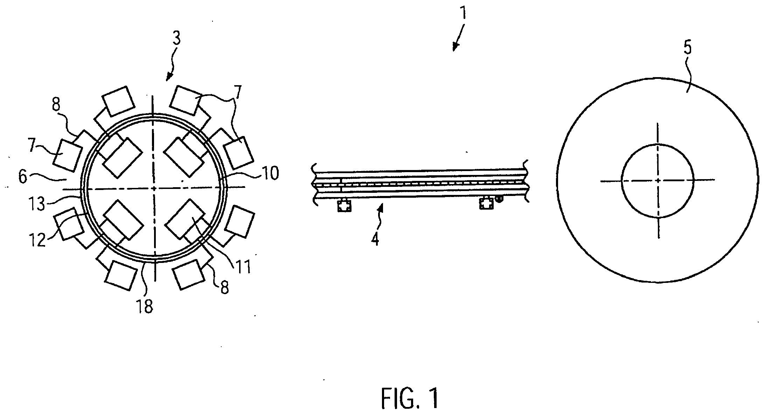

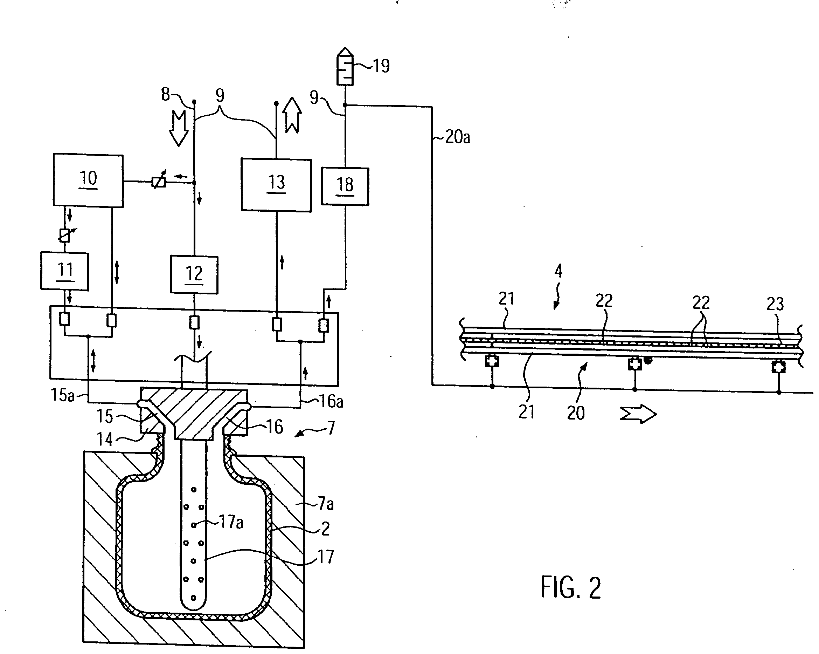

Fig. 1 zeigt eine Anlage 1 zur Handhabung von Hohlkörpern 2 (Fig. 2) aus Kunststoff, im dargestellten Ausführungsbeispiel sind dies Getränkeflaschen. Die Anlage 1 enthält eine Vorrichtung 3 zum Blasformen der Hohlkörper 2, die über eine Förderstrecke 4 mit einer Weiterbehandlungsmaschine 5, beispielsweise einer Befülleinrichtung, verbunden ist. Die beschriebene Blasformeinrichtung 3 ähnelt der Blasformeinrichtung der DE 10 2004 014 653 A1, auf die hiermit Bezug genommen wird.

Die Blasformeinrichtung 3 enthält ein rotierendes Blasmodul 6, das eine Vielzahl von Blasstationen 7 aufweist, in denen Blasformen 7a vorgesehen sind. Das Blasmodul 6 wird über eine Hauptblasluftleitung 8 mit Druckluft versorgt, die über einen Drehverteiler 9 in das Modul 6 gelangt. Es sind eine Vielzahl von Medienspeichern 10, 11 und 12 vorgesehen, die über die Hauptblasluftleitung 8 versorgt werden. Im dargestellten Ausführungsbeispiel sind zum Einsatz im Blasvorgang ein Vorblasmedienspeicher 11, ein Fertigblasmedienspeicher 10 und ein Spül- und Kühlluftmedienspeicher 12 dargestellt, die über entsprechende Ventile in bekannter Weise mit der Drucklufthauptversorgung 8 in Verbindung stehen. Die Speicher 10 bis 12 werden jeweils auf einen eigenen, vom anderen Speicher sich unterscheidenden Druck gehalten, wobei der Druck im Vorblasspeicher 11 zwischen 2 bis 20 bar, der Druck im Fertigblasspeicher 10 zwischen 15 bis 45 bar, und der Druck im Spül- und Kühlblasspeicher 12 zwischen 30 bis 45 bar beträgt.

Die Blasform 7a weist einen Innenhohlraum auf, der der Außenkontur des gewünschten Hohlkörpers 2 entspricht. Die Blasform 7a wird mit einer Blasdüse 14 verschlossen, die Durchlassverbindungen 15, 16 für Blasluft in den Hohlraum der Blasform 7a enthält, sowie eine nicht gezeichnete Durchlassverbindung aufweist, durch die eine Reckstange 17 in das Innere der Blasform 7a eingeführt werden kann. Die Reckstange 17 ist ebenfalls mit Luftauslassöffnungen 17a versehen.

Die Durchlassverbindung 15 ist über eine Leitung 15a und entsprechende Ventile sowohl mit dem Vorblasspeicher 11 als auch dem Fertigblasspeicher 10 verbunden, und zwar derart, dass aus dem Vorblasspeicher 11 Luft in die Blasform 7a eingeleitet werden kann. Aus dem Fertigblasspeicher 10 kann sowohl der Vorblasspeicher 11 als auch die Durchlassverbindung 15 in die Blasform 7a mit Druckluft versorgt werden. Die mit der Durchlassverbindung 15 verbundenen Ventile erlauben jedoch auch ein Rückführen von Druckluft aus der Blasform 7a in den Fertigblasspeicher 11 mit niedrigerem Druck, so dass die Blasluft solange recycelt werden kann, solange der Druck in der Blasform höher ist als der Druck in demjenigen Speicher, in den die gebrauchte Blasluft überführt werden soll.

Der Spül- und Kühlluftspeicher 12 steht, wiederum über ein Ventil, mit der Reckstange 17 in Verbindung und versorgt diese mit Spül- und Kühlluft am Ende des Blasvorgangs.

Die Durchlassverbindung 16 steht über eine Leitung 16a mit einem vierten Mediumspeicher 13 in Verbindung, der als Arbeitsluftspeicher ausgebildet ist und Arbeitsluft für andere Prozesse als das Blasen der Hohlkörper 2 sammelt und zur Verfügung stellt. Die Leitung 16a führt weiterhin über eine Abzweigung und wiederum über ein entsprechendes Ventil und bevorzugt über einen fünften Speicher 18 zu einer Druckablasseinrichtung in die Atmosphäre, was über einen Schalldämpfer 19 erfolgt. Der vierte und der fünfte Mediumspeicher 13, 18 sind innerhalb des Drehverteilers 9 angeordnet, können jedoch auch außerhalb vorgesehen sein. Der Schalldämpfer 19 ist bevorzugt außerhalb des Drehverteilers 9 angeordnet.

Alle Speicher 10 bis 13 und 18 sind bevorzugt als Speicher-Ringleitungen ausgebildet (s. Fig. 1).

Zum Herstellen des Hohlkörpers wird zunächst ein vorgewärmter Vorformling in die Blasform 7a eingeführt, und anschließend die Blasdüse 14 aufgesetzt. Dann wird aus dem Vorblasmedienspeicher 11 Vorblasluft in das Innere des Vorformlings eingeführt, so dass sich der Vorformling ausdehnt. Anschließend erfolgt das Fertigblasen mit Blasluft aus dem Fertigblasspeicher 10 unter einem erhöhten Druck. Gleichzeitig kann die Reckstange 17 in den Hohlkörper eingeführt werden und unterstützt das Recken. Bei Beendigung des Fertigblasvorgangs hat der Hohlkörper 2 im Wesentlichen schon seine endgültige Außenform, die Konturen sind aber noch nicht vollständig ausgeprägt. Deshalb wird Luft unter dem dritten, höheren Druck aus dem Spül- und Kühlmediumspeicher 12 in den Hohlkörper 2 eingeblasen und drückt diesen vollständig in die Konturen der Blasform 7a. Hat sich der Druck im Inneren des Hohlkörpers 2 aufgebaut, so wird dieser noch einige Zeit gehalten. Ist das Ausprägen der Form des Hohlkörpers 2 beendet, so kann bereits ein erster Schritt einer verbesserten Kühlung vorgenommen werden, in dem die Verbindung zum Fertigblasspeicher 10 geöffnet wird, so dass die Spül- und Kühlluft durch den Druckunterschied in den Fertigblasspeicher strömt und durch die Luftbewegung ein Abkühlen der Wandung des Hohlkörpers 2 von innen bewirkt. Ist keine Strömung mehr möglich, da ein Druckausgleich zwischen dem Inneren des Hohlkörpers 2 und dem Fertigblasspeicher 10 stattgefunden hat, so wird die Verbindung über die Durchlassverbindung 15 gesperrt und die Durchlassverbindung 16 geöffnet, wobei durch entsprechende Ventilschaltungen entweder der Arbeitsluftspeicher 13 und/oder der Exhaustluft-Speicher 18 mit der unter geringem Druck (einige wenige bar) stehenden Entlastungsluft gefüllt wird.

Die Exhaustluftleitung 16a bzw. der Exhaustluftspeicher 18 führen aus dem Drehverteiler 9 heraus und stehen außerhalb der Blasformeinrichtung 3 über eine Leitung 20a mit einer Kühleinrichtung 20 in Verbindung, die der Fördereinrichtung 4 zugeordnet ist. Die Kühleinrichtung 20 ist konstruktiv ähnlich ausgebildet wie die Kühleinrichtung der DE 20 2007 008 120 U1, auf die hiermit Bezug genommen wird. Demzufolge enthält die Kühleinrichtung 20 eine Förderstrecke, die mit seitlichen Wänden 21 (Draufsicht in Fig. 2) begrenzt ist und nicht dargestellte Bewegungsmittel für die zwischen den Wänden 21 in Richtung der Behandlungsmaschine 5 bewegten Hohlkörper 2 versehen ist. Im Bodenbereich der Fördereinrichtung 4 befindet sich ein mit Öffnungen 22 versehenes Rohr 23, das über die Kühlluftleitung 20a mit derjenigen Luft versorgt wird, die sich nach dem Blasvorgang und ggf. nach dem Recyclingvorgang in den Fertigblasspeicher 10 bzw. nach dem Befüllen des Arbeitsspeichers 13 noch im Inneren des Hohlkörpers 2 befindet. Durch Ansammlung der Luft im Kühlluftspeicher 18 kann ein gewisser Vorrat bereitgestellt werden. Durch die Öffnungen 22, die bevorzugt nicht als Düsen, sondern als einfache Strömungsöffnungen ausgebildet sind, wird die nach dem Blasen zurückbleibende, kühle, trockene und ölfreie Luft von außen gegen den Boden des Hohlkörpers 2 geblasen, der dadurch partiell zusätzlich gekühlt wird, so dass keine Gefahr einer Verformung mehr besteht, auch wenn dort eine größere Materialstärke als in den übrigen Bereichen des Hohlkörpers 2 vorhanden ist.

Auf diese Weise werden die Hohlkörper 2 auf eine Temperatur gebracht, die niedrig genug ist, so dass sich beim nachfolgenden Handhaben der Hohlkörper 2, beispielsweise beim Befüllen im Befüller 5, die Wandung des Hohlkörpers 2 nicht mehr verformen kann.

Wird keine Kühlung durch die Kühleinrichtung 20 benötigt, so kann die Exhaust-Luft in üblicher Weise über den Schalldämpfer 19 an die Atmosphäre abgegeben werden.

In Abwandlung des beschriebenen und gezeichneten Ausführungsbeispiels kann die Kühleinrichtung, nicht gemäß der Erfindung, auch andere konstruktive Ausgestaltungen, beispielsweise einzelne Blasdüsen oder eine durch die Luft gekühlte Fläche oder dergleichen enthalten. Der Kühlluftmedienspeicher muss nicht unbedingt vorhanden sein, sofern laufend genügend Luft bereitgestellt werden kann. Die Kühleinrichtung unter Verwendung von Exhaustluft kann auch mit anderen bekannten Blasformeinrichtungen und mit anderen Verfahren zu deren Betrieb kombiniert werden, sofern diese Verfahren Exhaustluft produzieren.

## Patentansprüche

1. Vorrichtung zum Blasformen von Hohlkörpern (2) aus Kunststoff, mit einer Blasformeinrichtung (3), in der die Hohlkörper (2) mittels Druckluft und Wärme in einer Blasform (7a) ausgeformt werden, wobei die Blasformeinrichtung (3) ein rotierendes Blasmodul (6), das eine Vielzahl von Blasstationen (7) aufweist, in denen die Blasformen (7a) vorgesehen sind, umfasst, wobei das Blasmodul (6) über eine Hauptblasluftleitung (8) mit Druckluft versorgt wird, die über einen Drehverteiler (9) in das Modul (6) 2. gelangt, wobei die Blasformeinrichtung (3) über eine Fördereinrichtung (4) mit einer Weiterbehandlungsmaschine (5) verbunden ist, wobei die verwendete Druckluft nach dem Ausformen als Exhaustluft über eine Ableitung (16a) aus dem Hohlkörper (7a) abgeführt wird, wobei die Ableitung (16a) mit einer Kühleinrichtung (20) zum partiellen Kühlen wenigstens eines Bereichs des Hohlkörpers (2) in Verbindung steht und die Kühleinrichtung (20) zum Kühlen des Bodens des Hohlkörpers (7a) ausgebildet ist, wobei die Ableitung (16a) aus dem Drehverteiler (9) herausführt und außerhalb der Blasformeinrichtung (3) über eine Leitung (20a) mit der Kühleinrichtung (20) verbunden ist, wobei die Kühleinrichtung (20) der Fördereinrichtung (4) zugeordnet ist, wobei im Bodenbereich der Fördereinrichtung (4) ein mit Öffnungen (22) versehenes Rohr (23) angeordnet ist, das über die Leitung (20a) mit derjenigen Luft versorgt wird, die sich nach dem Blasvorgang noch im inneren des Hohlkörpers befindet, wobei die Öffnungen ausgebildet sind, nach dem Blasen zurückbleibende Luft von außen gegen den Boden des Hohlkörpers zu blasen, um diesen partiell zusätzlich zu kühlen.

2. Vorrichtung nach Anspruch 1, **dadurch gekennzeichnet, dass** die Kühleinrichtung (20) außerhalb der Blasformeinrichtung (3) angeordnet ist.

3. Vorrichtung nach Anspruch 1 oder 2, **dadurch gekennzeichnet, dass** die Kühleinrichtung (20) einen Sammelraum (18) zum Speichern der Exhaustluft aufweist.

4. Vorrichtung nach einem der Ansprüche 1 bis 3, **dadurch gekennzeichnet, dass** die Kühleinrichtung (20) der Fördereinrichtung (4) aus der Blasformeinrichtung (3) zugeordnet ist.

5. Vorrichtung nach einem der Ansprüche 1 bis 4, **dadurch gekennzeichnet, dass** die Ableitung (16a) eine Abzweigung zu einem Exhaustluftausgang (19) in die Atmosphäre enthält.

6. Vorrichtung nach einem der Ansprüche 1 bis 5, **dadurch gekennzeichnet, dass** das Blasmodul mit dem eine Speicher-Ringleitung (18) für die Exhaustluft enthaltenden Drehverteiler (9) verbunden ist, der eine Verbindung zur Kühleinrichtung (20) hat.

## Claims

1. Apparatus for blow moulding hollow bodies (2) made of plastics material, comprising a blow moulding device (3) in which the hollow bodies (2) are formed in a blow mould (7a) by means of compressed air and heat, wherein the blow moulding device (3) comprises a rotating blowing module (6) which has a plurality of blowing stations (7) in which the blow moulds (7a) are provided, wherein the blowing module (6) is supplied with compressed air via a main blowing air line (8), which compressed air is fed into the module (6) via a rotary distributor (9), wherein the blow moulding device (3) is connected to a further processing machine (5) via a conveying device (4), wherein the compressed air used is discharged from the hollow body (7a) via a discharge line (16a) as exhaust air after the moulding, wherein the discharge line (16a) is connected to a cooling device (20) for partially cooling at least one region of the hollow body (2) and the cooling device (20) is designed to cool the bottom of the hollow body (7a), wherein the discharge line (16a) leads out of the rotary distributor (9) and, outside the blow moulding device (3), is connected to the cooling device (20) via a line (20a), wherein the cooling device (20) is assigned to the conveying device (4), wherein a tube (23) provided with openings (22) is arranged in the bottom region of the conveying device (4), which tube is supplied via the line (20a) with the air which is still inside the hollow body after the blowing process, wherein the openings are designed to blow air remaining after the blowing against the bottom of the hollow body from the outside in order to partially additionally cool said bottom.

2. Apparatus according to claim 1, **characterised in that** the cooling device (20) is arranged outside the blow moulding device (3).

3. Apparatus according to either claim 1 or claim 2, **characterised in that** the cooling device (20) has a collecting chamber (18) for storing the exhaust air.

4. Apparatus according to any of claims 1 to 3, **characterised in that** the cooling device (20) is assigned to the conveying device (4) from the blow moulding device (3).

5. Apparatus according to any of claims 1 to 4, **characterised in that** the discharge line (16a) contains a branch to an exhaust air outlet (19) into the atmosphere.

6. Apparatus according to any of claims 1 to 5, **characterised in that** the blowing module is connected to the rotary distributor (9) which contains a reservoir loop line (18) for the exhaust air and which has a connection to the cooling device (20).

## Revendications

1. Dispositif de moulage par soufflage de corps creux (2) en matière plastique, avec un appareil de moulage par soufflage (3) au sein duquel les corps creux (2) sont formés dans un moule de soufflage (7a) au moyen d'air comprimé et de chaleur, dans lequel l'appareil de moulage par soufflage (3) présente un module de soufflage (6) rotatif présentant une pluralité de postes de soufflage (7) au sein desquels sont prévus les moules de soufflage (7a), dans lequel le module de soufflage (6) est alimenté, par l'intermédiaire d'une conduite d'air de soufflage principale (8), en air comprimé parvenant dans le module (6) en passant par un répartiteur rotatif (9), dans lequel l'appareil de moulage par soufflage (3) est relié à une machine de retraitement (5) par l'intermédiaire d'un appareil de transport (4), dans lequel l'air comprimé utilisé est évacué du corps creux (7a) sous forme d'air d'échappement après moulage par l'intermédiaire d'une conduite d'évacuation (16a), dans lequel la conduite d'évacuation (16a) est en liaison avec un appareil de refroidissement (20) afin de refroidir partiellement au moins une zone du corps creux (2) et l'appareil de refroidissement (20) est conçu pour refroidir le fond du corps creux (7a), dans lequel la conduite d'évacuation (16a) sort du répartiteur rotatif (9) et est reliée à l'appareil de refroidissement (20) à l'extérieur de l'appareil de moulage par soufflage (3) par l'intermédiaire d'une conduite (20a), dans lequel l'appareil de refroidissement (20) est associé à l'appareil de transport (4), dans lequel un tube (23), muni d'ouvertures (22) et alimenté par l'intermédiaire de la conduite (20a) avec l'air se trouvant encore à l'intérieur du corps creux après l'opération de soufflage, est agencé dans la région inférieure de l'appareil de transport (4), dans lequel les ouvertures sont conçues pour, après le soufflage, souffler de l'air résiduel de l'extérieur vers le fond du corps creux afin de refroidir partiellement celui-ci de manière supplémentaire.

2. Dispositif selon la revendication 1, **caractérisé en ce que** l'appareil de refroidissement (20) est agencé à l'extérieur de l'appareil de moulage par soufflage (3).

3. Dispositif selon la revendication 1 ou 2, **caractérisé en ce que** l'appareil de refroidissement (20) présente un espace collecteur (18) permettant de stocker l'air d'échappement.

4. Dispositif selon l'une quelconque des revendications 1 à 3, **caractérisé en ce que** l'appareil de refroidissement (20) est associé à l'appareil de transport (4) à partir de l'appareil de moulage par soufflage (3).

5. Dispositif selon l'une quelconque des revendications 1 à 4, **caractérisé en ce que** la conduite d'évacuation (16a) contient une dérivation menant vers une sortie d'air d'échappement (19) dans l'atmosphère.

6. Dispositif selon l'une quelconque des revendications 1 à 5, **caractérisé en ce que** le module de soufflage est relié au répartiteur rotatif (9) contenant une conduite annulaire de stockage (18) pour l'air d'échappement et présentant une liaison menant à l'appareil de refroidissement (20).
